# EUROPÄISCHE PATENTSCHRIFT

(11) **EP 0 472 563 B1**
(45) Veröffentlichungstag und Bekanntmachung des Hinweises auf die Patenterteilung: **02.03.1994**
(21) Anmeldenummer: 90907014.6
(22) Anmeldetag: 12.05.1990
(51) Int. Cl.: B23B 29/034, B23C 5/24

(54) **WERKZEUG MIT VERSTELLBARER WECHSELKASSETTE**
TOOL WITH ADJUSTABLE INTERCHANGEABLE CARTRIDGE
OUTIL A MAGASIN INTERCHANGEABLE DEPLACABLE

(30) Priorität: 20.05.1989 DE 3916564
(43) Veröffentlichungstag der Anmeldung: 04.03.1992
(73) Patentinhaber: KOMET Präzisionswerkzeuge Robert Breuning GmbH, D-74354 Besigheim (DE)
(72) Erfinder: MÜNDLEIN, Werner, D-7120 Bietigheim-Bissingen (DE); SCHEER, Gerhard, D-7121 Löchgau (DE)
(74) Vertreter: Wolf, Eckhard, Dr.-Ing.
(86) Internationale Anmeldenummer: EP9000769
(87) Internationale Veröffentlichungsnummer: WO9014186

(56) Entgegenhaltungen:
- DE-A- 2 339 873
- FR-A- 2 147 611
- FR-A- 2 508 361

## Beschreibung

Die Erfindung betrifft ein Werkzeug für den Einsatz in Werkzeugmaschinen mit einem Schneidkopf und mindestens einer am Schneidkopf lösbar befestigbaren, eine vorzugsweise als Wendeplatte ausgebildete Schneidplatte tragenden Wechselkassette, die unter Einwirkung eines Verstellmechanismus in Zustellrichtung der Schneidplatte am Schneidkopf verstellbar ist, wobei der Verstellmechanismus einen Keilkörper aufweist, der mit einer mit seiner Verschieberichtung unter Bildung einer Keilschräge einen spitzen Winkel einschließenden Keilfläche gegen eine in Richtung der Keilschräge von einem rechten Winkel gegenüber der Zustellrichtung abweichende Schrägschulter der Wechselkassette flächig anliegt.

Werkzeuge mit verstellbaren Wechselkassetten lassen sich relativ leicht an unterschiedliche Werkstückabmessungen und Bearbeitungsaufgaben anpassen und sind daher universeller einsetzbar als Spezialwerkzeuge mit unverstellbaren Schneidplatten. Dieser Vorteil wirkt sich vor allem bei kleinen und mittleren Werkstückserien dahingehend aus, daß hierfür wenige Universalwerkzeuge ausreichen und nicht eine Vielzahl Spezialwerkzeuge hergestellt und auf Lager gehalten werden müssen. Andererseits bringt die Verstellbarkeit und die hierfür erforderliche Aufteilung des Werkzeugs in mehrere Teile hinsichtlich der Stabilität und Festigkeit Schwierigkeiten mit sich, die vor allem bei hohen Leistungsanforderungen mit den bisher bekannten fügetechnischen Mitteln oft nicht befriedigend gelöst werden können.

So wurde bereits vorgeschlagen, die Wechselkassette mit Hilfe einer in Zustellrichtung im Schneidkopf geführten und lose gegen eine Kante der Wechselkassette anliegenden Verstellschraube auf die gewünschte Schneidtiefe einzustellen und anschließend mit Hilfe einer Befestigungsschraube am Schneidkopf festzuklemmen. Beim Bearbeitungsvorgang wird über die Schneidplatte auf die Wechselkassette ein Kippmoment um die der Hauptschneide benachbarte rückwärtige Anlagekante der Wechselkassette am Schneidkopf ausgeübt, das vollständig von der Befestigungsschraube aufgenommen werden muß, da die Verstellschraube zur Aufnahme dieses Kippmoments nichts beiträgt. Hinzu kommt, daß bei einem drehenden Werkzeug auch die an der Wechselkassette des bekannten Werkzeugs angreifenden Fliehkräfte ausschließlich von der Befestigungsschraube aufgenommen werden müssen. Beide Belastungsarten wirken sich vor allem bei den heute angestrebten hohen Drehzahlen stabilitätsmindernd aus.

Daneben ist es bei einem Werkzeug der eingangs angegebenen Art bekannt (DE-A-2339873), einen zwischen einem Widerlagering und einem Schneidplättchen-Block einklemmbaren, schraubverschiebbaren Einstellkeil zur Einstellung der Schneidtiefe zu verwenden. Der Schneidplättchen-Block wird seinerseits über eine Befestigungsschraube am Werkzeugkörper festgeklemmt, die wiederum einen Großteil der Kippmomente und der Fliehkräfte aufnehmen muß. Zudem ist bei diesem Werkzeug ein weiteres Vorspannteil und eine aus mehreren Federn bestehende Federanordnung notwendig, um ein Spiel des Schneidplättchens während eines Einstellvorgangs zu vermeiden.

Ausgehend hiervon liegt der Erfindung die Aufgabe zugrunde, Maßnahmen zu treffen, mit denen die beim Bearbeitungsvorgang an der Wechselkassette angreifenden Kräfte und Momente besser als bisher in den Schneidkopf eingeleitet werden können und damit die Gesamtsteifigkeit des Werkzeugs der eingangs angegebenen Art erhöht werden kann.

Zur Lösung dieser Aufgabe werden die im Patentanspruch 1 angegebenen Merkmale vorgeschlagen. Weitere vorteilhafte Ausgestaltungen und Weiterbildungen der Erfindung ergeben sich aus den abhängigen Ansprüchen.

Die Erfindung geht von dem Gedanken aus, daß der Verstellmechanismus, der regelmäßig an der der Schneide der Schneidplatte gegenüberliegenden Kante gegen die Wechselkassette anliegt, zusätzlich so auszubilden ist, daß über ihn an der Wechselkassette angreifende, aus der Schnittkraft resultierende Kippmomente unter Entlastung der die Wechselkassette am Schneidkopf festhaltenden Befestigungsmittel auf den Schneidkopf übertragen werden können. Um dies zu erreichen, wird gemäß der Erfindung folgende Merkmalskombination vorgeschlagen:
- Der Keilkörper ist als Keilstößel ausgebildet;
- der Keilkörper ist längs einer parallel zur Schneidplattenebene und im wesentlichen quer zur Zustellrichtung ausgerichteten Führung des Schneidkopfs verschiebbar;
- die Schrägschulter und die ihr zugewandte Keilfläche weisen quer zur Keilschräge zusätzlich eine einen Formschluß zwischen Wechselkassette und Keilstößel bildende Hinterschneidung auf.

Gemäß einer bevorzugten Ausgestaltung der Erfindung weisen die Schrägschulter und die ihr zugewandte Keilfläche quer zur Keilschräge zusätzlich eine von einem rechten Winkel gegenüber der Zustellrichtung abweichende, den Formschluß zwischen Wechselkassette und Keilstößel bildende Hinterschneidungsschräge auf. Letzteres läßt sich fertigungstechnisch besonders einfach dadurch erreichen, daß der Keilstößel mit einem zylindrischen Führungsschaft in der als zylindrische Paßbohrung ausgebildeten Keilstößelführung sowohl axial verschiebbar als auch unter selbsttätiger Ausrichtung gegenüber der mit der Hinterschneidungsschäge versehenen Schrägschulter der Wechselkassette drehbar gelagert ist. Die Verstellung des Keilstößels erfolgt vorteilhafterweise durch einen axial in die Keilstößelführung eingreifenden, in einer Gewindebohrung des Schneidkopfs geführten Gewindestift.

Um die aus der Schnittkraft resultierenden Kräfte noch besser in den Schneidkopf einleiten zu können, greift der Keilstößel mit seiner der Keilfläche gegenüberliegenden teilzylindrischen Mantelfläche in eine entsprechend randoffene teilzylindrische Führungsnut des Schneidkopfs ein, wobei aus herstellungstechnischen Gründen die teilzylindrische Führungsnut mit der zylindrischen Paßbohrung im Schneidkopf vorteilhafterweise fluchtet. Zweckmäßig ist der Keilstößel als Zylinderstift ausgebildet, der im Bereich seines einen Endes einen flachen Keilschliff aufweist und an seinem anderen Ende den zylindrischen Führungsschaft bildet.

Um auch quer zur Zustellrichtung an der Wechselkassette angreifende Kräfte, beispielsweise Fliehkräfte, ohne Belastung der Befestigungsmittel auf den Schneidkopf übertragen zu können, weist entweder der Schneidkopf oder die Wechselkassette eine in Zustellrichtung ausgerichtete Führungsnut zur Aufnahme einer am anderen Teil (Wechselkassette oder Schneidkopf) angeformten Führungsrippe auf. Die Führungsrippe bzw. Führungsnut ist dabei vorteilhafterweise auf der der Schneidplatte gegenüberliegenden Seite der Wechselkassette angeordnet.

Vorteilhafterweise ist die Wechselkassette mittels einer Halteschraube am Schneidkopf lösbar befestigbar, welche Halteschraube entweder durch ein im Schneidkopf oder ein in der Wechselkassette angeordnetes, in Zustellrichtung langgestrecktes Loch hindurchgreift und in eine Gewindebohrung des anderen Teils (Wechselkassette oder Schneidkopf) eindrehbar ist.

Nach einer weiteren vorteilhaften Ausgestaltung der Erfindung weist der Schneidkopf eine zumindest zu einer Spankammer hin randoffene Bettungsaussparung zur Aufnahme der Wechselkassette auf, wobei der Keilstößel mit seinem die Keilfläche aufweisenden Teil durch eine die Keilstößelführung begrenzende Öffnung im Schneidkopf hindurch in die randoffene Aussparung eingreift. Um die bei der Verstellung der Wechselkassette im Bereich der Spankammer auftretenden Spalte möglichst klein zu halten, ist zweckmäßig an der Wechselkassette eine den die Schrägschulter und den Keilstößel auf der Seite der Spankammer übergreifende Blendrippe angeformt. Die mit der freien Schneidplattenfläche fluchtende Oberfläche der Blendrippe bildet dabei zweckmäßig einen Teil der Spankammer-Begrenzungsfläche.

Gemäß einer weiteren bevorzugten Ausgestaltung der Erfindung ist die Wechselkassette im wesentlichen in axialer Richtung am Schneidkopf verschiebbar. Der Schneidkopf besteht dabei vorteilhafterweise aus einem Grundkörper und zwei vorzugsweise über eine Stirnverzahnung und eine gemeinsame Klemmplatte mit dem Grundkörper verbundenen, gegenüber dem Grundkörper radial verstellbaren, je eine der axial verstellbaren Wechselkassetten tragenden und die radial ausgerichteten Keilstößelführungen enthaltenden Werkzeughaltern. Die Bettungsaussparung ist zweckmäßig radial nach außen hin und axial zur Stirnseite hin randoffen, während die radial innen liegenden, zueinander parallelen Begrenzungswände der Wechselkassette und der Bettungsaussparung mit der Schneidkopfachse einen zur Stirnseite des Schneidkopfs hin konvergierenden spitzen Winkel einschließen. Mit der letztgenannten Maßnahme wird im Bereich des Bettungseinsatzes eine verbesserte Steifigkeit und eine kompakte Bauweise erzielt.

Das erfindungsgemäße Werkzeug kann mit Vorteil für die Schruppbearbeitung von Bohrungen und dabei insbesondere als Zweischneidenschruppwerkzeug oder Einschneiden-Stufenwerkzeug eingesetzt werden. Weiter läßt sich die erfindungsgemäße Lehre bei radialen oder axialen Einstechdrehwerkzeugen, bei Überdrehwerkzeugen für kurze Außenzylinder, bei Rückwärtsbearbeitungswerkzeugen und bei Faswerkzeugen mit Vorteil anwenden. Schließlich ist auch die Verwendung bei Zweizahnfräsern und bei Kombinationswerkzeugen mit einer ausgewählten Kombination aus den vorstehend aufgeführten Anwendungsvarianten denkbar.

Im folgenden wird die Erfindung anhand eines in der Zeichnung in schematischer Weise dargestellten Ausführungsbeispiels näher erläutert. Es zeigen
- Fig. 1: eine Seitenansicht eines Doppelschneiden-Schruppwerkzeugs mit radial und axial verstellbaren Schneidplatten;
- Fig. 2: einen Ausschnitt aus Fig. 1 in vergrößerter, teilweise geschnittener Darstellung;
- Fig. 3: eine Seitenansicht in Richtung des Pfeils III der Fig. 2;

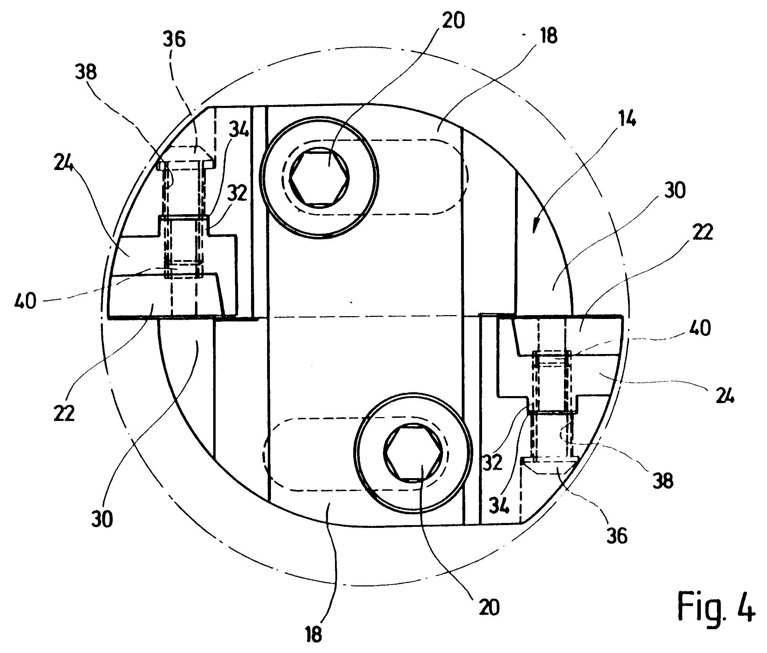

- Fig. 4: eine Stirnseitenansicht der beiden radial verstellbaren Werkzeughalter des Werkzeugs.

Das in der Zeichnung dargestellte Doppelschneiden-Schruppwerkzeug besteht im wesentlichen aus einem einen Paßzapfen 12 für den Anschluß an eine Maschinenspindel tragenden Grundkörper 10, zwei relativ zum Grundkörper 10 radial längs einer Stirnverzahnung 16 verstellbaren und am Grundkörper 10 mittels einer Klemmplatte 18 und Befestigungsschrauben 20 befestigbaren Werkzeughaltern 14 sowie je einer an den Werkzeughaltern axial verstellbar angeordneten, eine als Wendeplatte 22 ausgebildete Schneidplatte tragenden Wechselkassette 24. Die eine polygonförmigen Umriß aufweisende und mit drei Schneiden 23 versehene Wendeplatte ist mittels einer durch eine zentrale Bohrung hindurchgreifenden Kopfschraube 26 in einer ihrem Umriß angepaßten Bettung der Wechselkassette befestigt. Die Wechselkassette 24 ihrerseits ist in einer dem Umriß der Wechselkassette angepaßten Bettungsaussparung 28 des Werkzeughalters 14 angeordnet, die sowohl zur Seite der Spankammer 30 hin als auch radial und stirnseitig axial für den Durchtritt der betreffenden Randflächen der Wechselkassette offen ist. An der der Wendeplatte 22 gegenüberliegenden Breitseite der Wechselkassette 24 ist eine Führungsrippe 32 angeformt, die in eine am Werkzeughalter achsparallel zur Drehachse des Werkzeugs ausgerichtete Führungsnut 34 eingreift. Damit ist eine axiale Verschiebbarkeit der Wechselkassette gegenüber dem Werkzeughalter sowie eine radiale Abstützung und Kraftübertragung zwischen Wechselkassette 24 und Werkzeughalter 14 gewährleistet. Die Befestigung der Wechselkassette 24 am Werkzeughalter 14 erfolgt mit Hilfe einer Kopfschraube 36, die von hinten her durch ein Langloch 38 des Werkzeughalters hindurch in eine Gewindebohrung im Bereich der Führungsrippe 32 der Wechselkassette 24 eingreift.

Zur Axialverstellung der Wechselkassette 24 ist in dem Werkzeughalter 14 eine radial verlaufende Paßbohrung 42 angeordnet, in der ein als Zylinderstift mit angeschliffener Keilfläche 44 ausgebildeter Keilstößel längsverschiebbar und verdrehbar angeordnet ist. Die Paßbohrung 42 geht an ihrem rückwärtigen Ende in eine Gewindebohrung 45 über, in der ein Gewindestift 48 zur Verschiebung des Keilstößels 46 angeordnet ist. Der Keilstößel 46 greift mit seinem die Keilfläche 44 aufweisenden Ende im wesentlichen radial in die Bettungsaussparung 28 ein und ist dort mit seiner der Keilfläche 44 gegenüberliegenden teilzylindrischen Mantelfläche 50 in einer mit dem betreffenden Teil der Paßbohrung 42 fluchtenden teilzylindrischen Nut in der unteren axialen Begrenzungswand der Bettungsaussparung 28 geführt.

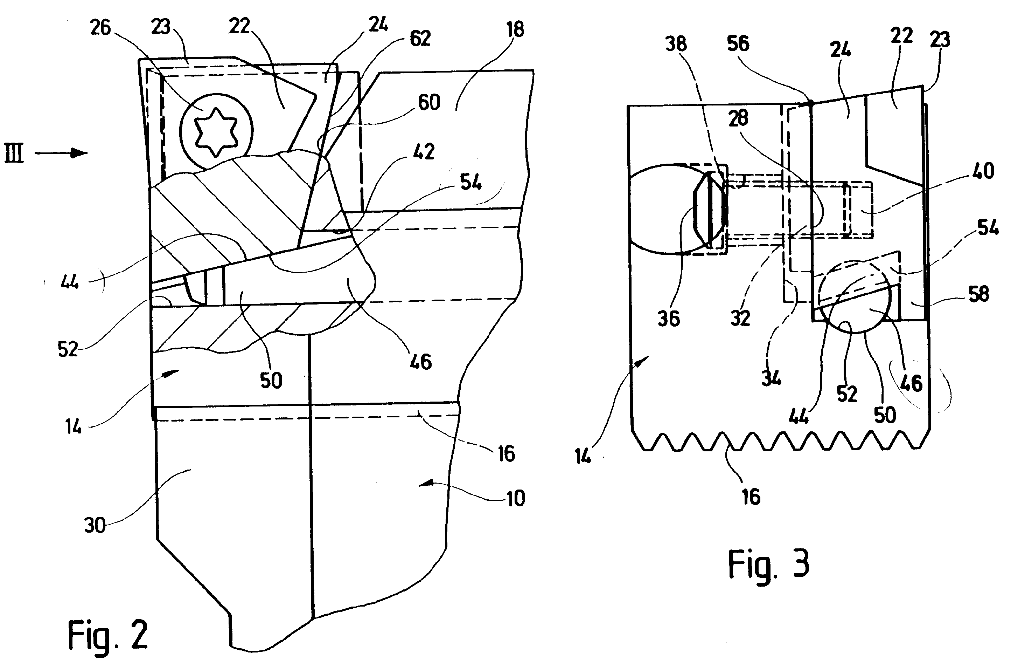

Andererseits weist die Wechselkassette im Bereich ihrer dem Keilstößel 46 zugewandten Kante eine Schrägfläche 54 auf, die gegenüber der (axialen) Zustellrichtung in zwei Richtungen unter Bildung einer der Keilschräge entsprechenden Schräge und einer Hinterschneidungsschräge schräg ausgerichtet ist. Die Keilschräge schließt in Verschieberichtung des Keilstößels mit einer Radialebene einen Winkel (Keilwinkel) von etwa 12° ein (Fig. 2), während die Hinterschneidungsschräge in der hierzu senkrechten Richtung mit der Radialebene einen Winkel von ca. 15° einschließt (Fig. 3). Der Hinterschneidungswinkel wird dabei so gewählt, daß bei einem unter der Einwirkung von Schnittkräften an der Schneide 23 ausgelösten Kippen um die Kippachse 56 die Wechselkassette 24 im Bereich ihrer Schrägfläche 54 wegen Formschlusses nicht aus der Bettungsaussparung 28 ausgehoben werden kann. Dadurch wird die nach dem Verstellvorgang angezogene Befestigungsschraube 36 von den beim Schneidvorgang auftretenden Momentenbelastungen weitgehend entlastet. Der Keilstößel 46 wird aufgrund seiner drehbaren Lagerung in der Paßbohrung 42 beim Verstellvorgang durch die Schrägfläche 54 an der Wechselkassette 24 selbsttätig in die in Fig. 3 dargestellte Schräglage gedreht. Zur Spankammer 30 hin ist der den Keilstößel 46 aufnehmende Teil der Bettungsaussparung 28 durch eine Blendrippe 58 verdeckt.

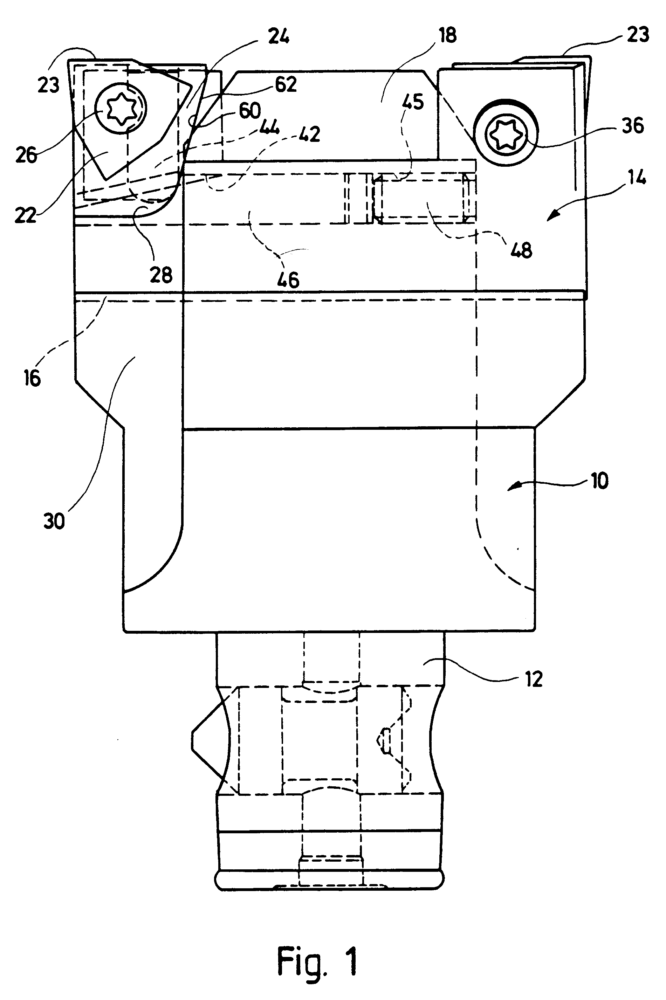

Wie insbesondere aus Fig. 1 und 2 zu ersehen ist, schließen die radial innenliegende Begrenzungswand 60 der Bettungsaussparung 28 und die ihr benachbarte Begrenzungsfläche 62 der Wechselkassette 24 einen mit der Achse des Werkzeugs zur Stirnseite hin konvergierenden spitzen Winkel ein, um sicherzustellen, daß der Werkzeughalter im Bereich der Bettungsaussparung noch eine ausreichende Festigkeit bzw. Steifigkeit besitzt.

## Patentansprüche

1. Werkzeug für den Einsatz in Werkzeugmaschinen mit einem Schneidkopf (Werkzeughalter 14) und mindestens einer am Schneidkopf (14) lösbar befestigbaren, eine vorzugsweise als Wendeplatte (22) ausgebildete Schneidplatte tragenden Wechselkassette (24), die unter Einwirkung eines Verstellmechanismus (46,48) in Zustellrichtung der Schneidplatte (22) am Schneidkopf (14) verstellbar ist, wobei der Verstellmechanismus einen Keilkörper (46) aufweist, der mit einer mit seiner Verschieberichtung unter Bildung einer Keilschräge einen spitzen Winkel einschließenden Keilfläche (44) gegen eine in Richtung der Keilschräge von einem rechten Winkel gegenüber der Zustellrichtung abweichende Schrägschulter (54) der Wechselkassette (24) flächig anliegt, **dadurch gekenn****zeichnet,** daß der Keilkörper als Keilstößel (46) ausgebildet ist, der längs einer parallel zur Schneidplattenebene und im wesentlichen quer zur Zustellrichtung ausgerichteten Führung (Paßbohrung 42) des Schneidkopfs (14) verschiebbar ist, und daß die Schrägschulter (54) und die ihr zugewandte Keilfläche (44) quer zur Keilschräge zusätzlich eine einen Formschluß zwischen Wechselkassette (24) und Keilstößel (46) bildende Hinterschneidung aufweisen.

2. Werkzeug nach Anspruch 1, **dadurch gekennzeichnet,** daß die Schrägschulter (54) und die ihr zugewandte Keilfläche (44) quer zur Keilschräge zusätzlich eine von einem rechten Winkel gegenüber der Zustellrichtung abweichende, den Formschluß zwischen Wechselkassette (24) und Keilstößel (46) bildende Hinterschneidungsschräge aufweisen.

3. Werkzeug nach Anspruch 1 oder 2, **dadurch gekenn****zeichnet,** daß der Keilstößel (46) mit einem zylindrischen Führungsschaft in der als zylindrische Paßbohrung (42) ausgebildeten Keilstößelführung sowohl verschiebbar als auch unter selbsttätiger Ausrichtung der Keilfläche (44) gegenüber der Schrägschulter (54) der Wechselkassette (24) drehbar gelagert ist.

4. Werkzeug nach einem der Ansprüche 1 bis 3, **dadurch** **gekennzeichnet,** daß der Keilstößel (46) durch einen vorzugsweise axial in die Keilstößelführung (42) eingreifenden, in einer Gewindebohrung (45) des Schneidkopfs (14) geführten Gewindestift (48) verschiebbar ist.

5. Werkzeug nach einem der Ansprüche 1 bis 4, **dadurch** **gekennzeichnet,** daß der Keilstößel (46) mit seiner der Keilfläche (44) gegenüberliegenden teilzylindrischen Mantelfläche (50) in eine entsprechende teilzylindrische Führungsnut (52) des Schneidkopfs (14) eingreift.

6. Werkzeug nach Anspruch 5, **dadurch gekennzeichnet,** daß die teilzylindrische Führungsnut (52) mit der zylindrischen Paßbohrung (42) fluchtet.

7. Werkzeug nach einem der Ansprüche 2 bis 6, **dadurch** **gekennzeichnet,** daß der Keilstößel (46) durch einen im Bereich seines einen Endes einen flachen Keilschliff aufweisenden und an seinem anderen Ende den zylindrischen Führungsschaft bildenden Zylinderstift gebildet ist.

8. Werkzeug nach einem der Ansprüche 1 bis 7, **dadurch** **gekennzeichnet,** daß der Schneidkopf (14) eine in Zustellrichtung ausgerichtete Führungsnut (34) zur Aufnahme einer an der Wechselkassette (24) angeformten Führungsrippe (32) aufweist.

9. Werkzeug nach einem der Ansprüche 1 bis 8, **dadurch** **gekennzeichnet,** daß die Wechselkassette (24) eine in Zustellrichtung ausgerichtete Führungsnut zur Aufnahme einer am Schneidkopf (14) angeformten Führungsrippe aufweist.

10. Werkzeug nach Anspruch 8 oder 9, **dadurch gekenn****zeichnet,** daß die Führungsrippe (32) bzw. Führungsnut (34) auf der der Schneidplatte (22) gegenüberliegenden Seite der Wechselkassette (24) angeordnet ist.

11. Werkzeug nach einem der Ansprüche 1 bis 10, **da****durch gekennzeichnet,** daß die Wechselkassette (24) mittels einer durch ein im Schneidkopf (14) angeordnetes, in Zustellrichtung langgestrecktes Loch (38) hindurchgreifende, in eine Gewindebohrung (40) der Wechselkassette (24) eindrehbaren Kopfschraube (36) am Schneidkopf (14) befestigbar ist.

12. Werkzeug nach einem der Ansprüche 1 bis 10, **da****durch gekennzeichnet,** daß die Wechselkassette (24) mittels einer durch ein in der Wechselkassette angeordnetes, in Zustellrichtung langgestrecktes Loch hindurchgreifenden, in eine Gewindebohrung des Schneidkopfs eindrehbaren Kopfschraube am Schneidkopf (14) befestigbar ist.

13. Werkzeug nach einem der Ansprüche 1 bis 12, **da****durch gekennzeichnet,** daß der Schneidkopf (14) eine zumindest zu einer Spankammer (30) hin randoffene Bettungsaussparung (28) zur Aufnahme der Wechselkassette (24) aufweist, und daß der Keilstößel (46) mit seinem die Keilfläche (44) aufweisenden Teil durch eine Öffnung im Schneidkopf (14) hindurch in die Bettungsaussparung eingreift.

14. Werkzeug nach Anspruch 13, **dadurch gekennzeichnet,** daß an der Wechselkassette (24) eine die Bettungsaussparung (48) im Bereich des Keilstößels (46) auf der Seite der Spankammer (30) übergreifende Blendrippe (58) angeformt ist.

15. Werkzeug nach Anspruch 14, **dadurch gekennzeichnet,** daß die mit der freien Schneidplattenfläche fluchtende Oberfläche der Blendrippe (58) einen Teil der Spankammer-Begrenzungsfläche (30) bildet.

16. Werkzeug nach einem der Ansprüche 1 bis 15, **da****durch gekennzeichnet,** daß die Wechselkassette (24) in axialer Richtung des Werkzeugs verschiebbar ist.

17. Werkzeug nach einem der Ansprüche 13 bis 16, **da****durch gekennzeichnet,** daß die Bettungsaussparung (28) radial nach außen hin und axial zur Stirnseite hin randoffen ist.

18. Werkzeug nach Anspruch 16 oder 17, **dadurch gekenn****zeichnet,** daß die Wechselkassette (24) und die Bettungsaussparung (28) zueinander parallele, mit der Werkzeugachse einen zur Stirnseite des Schneidkopfs (14) hin konvergierenden spitzen Winkel einschließende Begrenzungswände (60,62) aufweisen.

19. Werkzeug nach einem der Ansprüche 1 bis 18, da**durch gekennzeichnet,** daß am Schneidkopf (14) mindestens zwei in Zustellrichtung unabhängig voneinander verstellbare Wechselkassetten (24) im Winkelabstand voneinander angeordnet sind.

20. Werkzeug nach einem der Ansprüche 1 bis 19, **da****durch gekennzeichnet,** daß der Schneidkopf einen Grundkörper (10) und zwei vorzugsweise über eine Stirnverzahnung und eine gemeinsame Klemmplatte mit dem Grundkörper (10) verbundene, gegenüber dem Grundkörper radial verstellbare, je eine vorzugsweise axial verstellbare Wechselkassette (24) tragende und je eine radial ausgerichtete Keilstößelführung enthaltende Werkzeughalter (14) aufweist.

## Claims

1. Tool for use in machine tools, having a cutting head (tool holder 14) and at least one exchangeable cartridge (24), which may be detachably fastened to the cutting head (14), carries a cutting plate preferably in the form of a turnplate (22) and under the action of an adjusting mechanism (46, 48) is adjustable on the cutting head (14) in infeed direction of the cutting plate (22), the adjusting mechanism having a wedge element (46) which rests with a wedge surface (44), which with its direction of displacement defines an acute angle and simultaneously forms a wedge slope, flat against an inclined shoulder (54) of the exchangeable cartridge (24), said shoulder in the direction of the wedge slope deviating from a right angle relative to the infeed direction, **characterized in** **that** the wedge element takes the form of a wedge ram (46) which is displaceable along a guide (fitting bore 42) of the cutting head (14) aligned parallel to the cutting plate plane and substantially at right angles to the infeed direction, and that the inclined shoulder (54) and the wedge surface (44) facing said shoulder additionally have, at right angles to the wedge slope, an undercut forming a form closure between the exchangeable cartridge (24) and the wedge ram (46).

2. Tool according to claim 1, **characterized in that** the inclined shoulder (54) and the wedge surface (44) facing said shoulder additionally have, at right angles to the wedge slope, an undercut slope which deviates from a right angle relative to the infeed direction and forms the form closure between the exchangeable cartridge (24) and the wedge ram (46).

3. Tool according to claim 1 or 2, **characterized in that** the wedge ram (46) is supported with a cylindrical guide shaft in the wedge ram guide in the form of a cylindrical fitting bore (42) so as to be both displaceable and rotatable, with simultaneous automatic alignment of the wedge surface (44) relative to the inclined shoulder (54) of the exchangeable cartridge (24).

4. Tool according to one of claims 1 to 3, **characterized in** **that** the wedge ram (46) is displaceable by means of a threaded pin (48) which preferably engages axially into the wedge ram guide (42) and is guided in a threaded bore (45) of the cutting head (14).

5. Tool according to one of claims 1 to 4, **characterized in** **that** the wedge ram (46) engages with its part-cylindrical surface (50) lying opposite the wedge surface (44) into a corresponding part-cylindrical guide groove (52) of the cutting head (14).

6. Tool according to claim 5, **characterized in that** the part-cylindrical guide groove (52) is aligned with the cylindrical fitting bore (42).

7. Tool according to one of claims 2 to 6, **characterized in** **that** the wedge ram (46) is formed by a cylindrical pin which in the region of its one end has a flat, ground taper and at its other end forms the cylindrical guide shaft.

8. Tool according to one of claims 1 to 7, **characterized in** **that** the cutting head (14) has a guide groove (34) aligned in infeed direction for receiving a guide rib (32) formed on the exchangeable cartridge (24).

9. Tool according to one of claims 1 to 8, **characterized in** **that** the exchangeable cartridge (24) has a guide groove aligned in infeed direction for receiving a guide rib formed on the cutting head (14).

10. Tool according to claim 8 or 9, **characterized in that the** guide rib (32) or guide groove (34) is disposed on the opposite side of the exchangeable cartridge (24) to the cutting plate (22).

11. Tool according to one of claims 1 to 10, **characterized in** **that** the exchangeable cartridge (24) is fastenable to the cutting head (14) with the aid of a cap screw (36) which engages through a hole (38), disposed in the cutting head (14) and elongated in infeed direction, and may be screwed into a threaded bore (40) of the exchangeable cartridge (24).

12. Tool according to one of claims 1 to 10, **characterized in** **that** the exchangeable cartridge (24) is fastenable to the cutting head (14) with the aid of a cap screw which engages through a hole, disposed in the exchangeable cartridge and elongated in infeed direction, and may be screwed into a threaded bore of the cutting head.

13. Tool according to one of claims 1 to 12, **characterized in** **that** the cutting head (14) has a bedding recess (28), whose edge is open at least towards a chip chamber (30), for receiving the exchangeable cartridge (24), and that the wedge ram (46) engages with its part having the wedge surface (44) through an opening in the cutting head (14) into the bedding recess.

14. Tool according to claim 13, **characterized in that** a masking rib (58), which engages over the bedding recess (48) in the region of the wedge ram (46) at the side of the chip chamber (30), is formed on the exchangeable cartridge (24).

15. Tool according to claim 14, **characterized in that** the surface of the masking rib (58) which is aligned with the free cutting plate surface forms part of the chip chamber periphery (30).

16. Tool according to one of claims 1 to 15, **characterized in** **that** the exchangeable cartridge (24) is displaceable in an axial direction of the tool.

17. Tool according to one of claims 13 to 16, **characterized** **in that** the bedding recess (28) is open-edged radially outwards and axially towards the front.

18. Tool according to claim 16 or 17, **characterized in that** the exchangeable cartridge (24) and the bedding recess (28) have boundary walls (60, 62) which are parallel to one another and with the tool axis define an acute angle converging towards the front of the cutting head (14).

19. Tool according to one of claims 1 to 18, **characterized in** **that** at least two exchangeable cartridges (24), which are adjustable in infeed direction independently of one another, are disposed at an angular distance from one another on the cutting head (14).

20. Tool according to one of claims 1 to 19, **characterized in** **that** the cutting head comprises a base member (10) and two tool holders (14) which preferably are connected by radial serrations and a common clamping plate to the base member (10), are radially adjustable relative to the base member, each carry one preferably axially adjustable exchangeable cartridge (24) and each contain one radially aligned wedge ram guide.

## Revendications

1. Outil pour l'utilisation dans des machines-outils, comprenant une tête de coupe (porte-outil 14) et au moins un magasin interchangeable (24) qui peut être monté de manière amovible sur la tête de coupe (14) et porte une plaquette de coupe avantageusement conformée en plaquette réversible (22), et qui, sous l'action d'un mécanisme de réglage (46, 48), peut être déplacé sur la tête de coupe (14) dans la direction d'approche de la plaquette de coupe (22), le mécanisme de réglage comprenant un corps à clavette (46) dont l'une des surfaces de clavette (44) renfermant avec sa direction de déplacement un angle aigu en formant un chanfrein de clavette, est appliquée à plat contre un épaulement incliné (54) du magasin interchangeable (24) dont l'orientation en direction du chanfrein de clavette diffère d'un angle droit par rapport à la direction d'approche, **caractérisé** **en ce** que le corps à clavette est conformé en poussoir à clavette (46) qui peut être déplacé le long d'un guidage (alésage ajusté 42) de la tête de coupe (14) orienté parallèlement au plan de la plaquette de coupe et sensiblement transversalement par rapport à la direction d'approche, et que l'épaulement incliné (54) et la surface de clavette (44) tournée vers celui-ci présentent en supplément, transversalement par rapport au chanfrein de clavette, une contre-dépouille qui forme un engagement positif entre le magasin interchangeable (24) et le poussoir à clavette (46).

2. Outil selon la revendication 1, caractérisé en ce que l'épaulement incliné (54) et la surface de clavette (44) tournée vers celui-ci présentent en supplément, transversalement par rapport au chanfrein de clavette, un chanfrein de contre-dépouille qui diffère d'un angle droit par rapport à la direction d'approche et forme un engagement positif entre le magasin interchangeable (24) et le poussoir à clavette (46).

3. Outil selon l'une des revendications 1 ou 2, caractérisé en ce que le poussoir à clavette (46) est monté avec une tige de guidage cylindrique de façon à pouvoir aussi bien être déplacé axialement dans le guidage du poussoir à clavette conformé en alésage cylindrique ajusté (42) qu'être tourné, avec alignement automatique de la surface de clavette (44) par rapport à l'épaulement incliné (54) du magasin interchangeable (24).

4. Outil selon l'une quelconque des revendications 1 à 3, caractérisé en ce que le poussoir à clavette (46) peut être déplacé au moyen d'une tige filetée (48) qui s'engage avantageusement axialement dans le guidage (42) du poussoir à clavette et est guidée dans un taraudage (45) de la tête de coupe (14).

5. Outil selon l'une quelconque des revendications 1 à 4, caractérisé en ce que le poussoir à clavette (46) s'engage avec sa surface latérale (50) partiellement cylindrique et située en face de la surface de clavette (44), dans une rainure de guidage (52) correspondante de la tête de coupe (14), de forme partiellement cylindrique.

6. Outil selon la revendication 5, caractérisé en ce que la rainure de guidage (52) partiellement cylindrique est alignée avec l'alésage cylindrique ajusté (42).

7. Outil selon l'une quelconque des revendications 2 à 6, caractérisé en ce que le poussoir de clavette (46) est conformé en goupille cylindrique qui, dans la région de l'une de ses extrémités, présente une coupe en coin plat et forme à l'autre extrémité la tige de guidage cylindrique.

8. Outil selon l'une quelconque des revendications 1 à 7, caractérisé en ce que la tête de coupe (14) présente une rainure de guidage (34) orientée dans la direction d'approche et destinée à recevoir une nervure de guidage (32) conformée sur le magasin interchangeable (24),

9. Outil selon l'une quelconque des revendications 1 à 8, caractérisé en ce que le magasin interchangeable (24) présente une rainure de guidage orientée dans la direction d'approche et destinée à recevoir une nervure de guidage conformée sur la tête de coupe (14).

10. Outil selon l'une des revendications 8 ou 9, caractérisé en ce que la nervure de guidage (32) ou la rainure de guidage (34) est disposée sur le côté du magasin interchangeable (24) situé en face de la plaquette de coupe (22).

11. Outil selon l'une quelconque des revendications 1 à 10, caractérisé en que le magasin interchangeable (24) peut être fixé sur la tête de coupe (14) au moyen d'une vis à tête (36) laquelle traverse un trou allongé (38) dans la direction d'approche, percé dans la tête de coupe (14), et peut être vissée dans un taraudage (40) du magasin interchangeable (24).

12. Outil selon l'une quelconque des revendications 1 à 10, caractérisé en ce que le magasin interchangeable (24) peut être fixé sur la tête de coupe (14) au moyen d'une vis de tête laquelle traverse un trou allongé dans la direction d'approche, percé dans ledit magasin interchangeable, et peut être vissée dans un taraudage de la tête de coupe.

13. Outil selon l'une quelconque des revendications 1 à 12, caractérisé en ce que la tête de coupe (14) comporte pour la réception du magasin interchangeable (24), un évidement d'encastrement (28) avec un bord ouvert au moins en direction d'un logement de copeaux (30), et que le poussoir à clavette (46) s'engage avec sa partie munie de la surface de clavette (44) dans l'évidement d'encastrement en passant par une ouverture dans la tête de coupe (14).

14. Outil selon la revendication 13, caractérisé en ce qu'une nervure de protection (58) qui recouvre l'évidement d'encastrement (48) dans la région du poussoir à clavette (46), du côté du logement de copeaux (30), est conformée sur le magasin interchangeable (24).

15. Outil selon la revendication 14, caractérisé en ce que la surface de la nervure de protection (58) alignée avec la surface libre de la plaquette de coupe fait partie de la surface de délimitation (30) du logement de copeaux.

16. Outil selon l'une quelconque des revendications 1 à 15, caractérisé en ce que le magasin interchangeable (24) peut être déplacé dans le sens axial de l'outil.

17. Outil selon l'une quelconque des revendications 13 à 16, caractérisé en ce que l'évidement d'encastrement (28) présente un bord ouvert radialement vers l'extérieur et axialement vers la face frontale.

18. Outil selon l'une des revendications 16 ou 17, caractérisé en ce que le magasin interchangeable (24) et l'évidement d'encastrement (28) présentent des parois de délimitation (60, 62) parallèles et renfermant avec l'axe de l'outil un angle aigu qui converge en direction de la face frontale de la tête de coupe (14).

19. Outil selon l'une quelconque des revendications 1 à 18, caractérisé en ce qu'au moins deux magasins interchangeables (24) réglables indépendamment l'un de l'autre sont montés à distance angulaire sur la tête de coupe (14).

20. Outil selon l'une quelconque des revendications 1 à 19, caractérisé en ce que la tête de coupe comprend un corps de base (10) et deux porte-outils (14) couplés avec le corps de base (10), de préférence par l'intermédiaire d'une denture droite et d'une plaque de serrage commune, radialement mobiles par rapport au corps de base, portant chacun un magasin interchangeable (24) déplaçable de préférence dans le sens axial, et comportant chacun un guidage d'extension radiale pour le poussoir à clavette.
